# EUROPEAN PATENT APPLICATION

(11) **EP 3 493 414 A1**
(43) Date of publication of application: **05.06.2019**
(21) Application number: 17205160.9
(22) Date of filing: 04.12.2017
(51) Int. Cl.: H04B 5/00, H04B 13/00

(54) **APPARATUS TO PROCESS NFC AND HBC INFORMATION**

(71) Applicant: Panthronics AG, 8041 Graz (AT)
(72) Inventor: Lessiak, Andreas, 8151 St. Bartholomä (AT); Jongsma, Jakob, 8042 Graz (AT)
(74) Representative: Röggla, Harald

(57) **Abstract**

A communication apparatus (1) that comprises a NFC communication module with an antenna (2) to transmit and receive NFC Information (5, 6) over the antenna (2) based on the NFC Standard and that comprises an HBC communication module with at least one pad (14) to transmit and receive HBC Information (15) over the at least one pad (14) via a human body wherein the HBC communication module comprises HBC modulation means (17) to transmit and receive HBC Information (15) modulated in HBC frequency sidebands (18, 19) outside or slightly overlapping the NFC frequency band (7) to enable a parallel and independent communication of NFC Information (5, 6) and HBC Information (15).

## Description

### FIELD OF THE INVENTION

The present invention relates to a communication apparatus that comprises an NFC communication module with an antenna to transmit and receive NFC Information over the antenna based on the NFC Standard and that comprises an HBC communication module with at least one pad to transmit and receive HBC Information over the at least one pad via a human body.

The present invention furthermore relates to a method to transmit and receive NFC Information over an antenna based on the NFC Standard and to transmit and receive HBC Information over at least one pad via a human body.

### BACKGROUND OF THE INVENTION

Such an apparatus is disclosed in the prior art document US 2017/0272128 A1 that enables a Near Field Communication (NFC) using an electric field of an antenna as standardized in the international standard ISO/IEC18000. The known apparatus furthermore enables a Human Body Communication (HBC) using a magnetic field of the antenna in a non-contact manner. The apparatus disclosed in the document uses a time division communication wherein alternating NFC and HBC polling commands are transmitted to detect a communication partner that wants to non-contact communicate NFC Information via the electric field of the antenna or a communication partner that wants to non-contact communicate HBC Information via the magnetic field of the antenna. If one of such communication partners is detected, either NFC Information is communicated, or HBC Information is communicated via the antenna and after finalization of the communication polling for new communication partners commences again. The disclosed communication apparatus comprises the disadvantage that the communication of NFC Information blocks the communication of HBC Information and vice versa. The disclosed communication apparatus comprises the further disadvantage that a communication partner to communicate NFC Information or HBC Information might be in the short communication range of the antenna for only a very limited time with only a few seconds or milliseconds time to communicate the Information. Due to the time division polling communication for communication partners it might happen that valuable time for the communication is lost until the NFC or HBC communication module starts to set-up the communication and transfers NFC or HBC Information.

Prior art document US 9,692,525 B2 discloses a further apparatus to enable communication of NFC Information and HBC Information wherein HBC Information is transmitted via two contact pads that are touched or nearly touched by a user to use his body for human body communication. In general HBC communication uses the human body to transmit HBC Information via the human body to e.g. enable a transmission of audio data from a reproduction apparatus to wireless headphones and the NFC communication might be needed first to facilitate the HBC communication. The apparatus disclosed in US 9,692,525 B2 as well uses a polling communication to identify a communication partner and a serial communication with one communication partner after the other as explained above and therefore comprises the same disadvantages.

### SUMMARY OF THE INVENTION

It is a target of the invention to provide an apparatus and a method to enable a communication of NFC Information and HBC Information that avoids above stated drawbacks.

This target is achieved with an apparatus with an HBC communication module that comprises HBC modulation means to transmit and receive HBC Information modulated in HBC frequency sidebands outside or slightly overlapping the NFC frequency band to enable a parallel and independent communication of NFC Information and HBC Information.

This target is furthermore achieved with a method that comprises the following steps: transmit and receive NFC Information within the NFC frequency band and modulate and/or demodulate HBC Information in/from HBC frequency sidebands outside or slightly overlapping the NFC frequency band to enable a parallel and independent communication of NFC Information and HBC Information.

The claimed apparatus and method therefore use HBC frequency side bands outside or slightly overlapping with the NFC frequency band as defined in the NFC Standard to communicate HBC Information what enables a complete independent parallel communication of NFC Information and HBC Information. These claim elements enable the advantage, that no communication time is lost with a possible communication partner that might be in the short communication range of the antenna or pad for only a very limited time with only a few seconds or milliseconds time to communicate the Information. For such a time-critical communication, it is only possible with this parallel all-time ready to communicate NFC Information and HBC Information feature to finalize the communication before the communication partner again leaves the communication range of the claimed apparatus. Furthermore, this parallel and complete independent communication of NFC Information and HBC Information enables new applications where e.g. during the communication of HBC Information one or more times an authentication of the user is needed, which authentication would be provided by NFC Information comprising a key stored in a secure element of one of the communication partners. In other applications HBC Information may be transferred from e.g. a body sensor received in the claimed apparatus as NFC Information from the claimed apparatus to a mobile phone to further process this biometric information.

It is, in particular, advantageous to select the NFC frequency of 13,56 MHz as defined in the NFC Standard as carrier frequency for a Frequency Shift Key (FSK) modulation of the HBC Information what generates HBC frequency side bands that comprise the HBC Information. The NFC Standard defines different protocols and data rates, which lead to a different NFC frequency range around the carrier frequency of 13,56 MHz. For instance, the NFC protocol ISO/IEC 14443-B, the device being in card emulation mode, and with a data rate of 106 kbit/sec as defined in the NFC Standard leads to an approximate NFC frequency range of 212 kHz, centered at 13,56 MHz, where most of the signal energy is located. Another example is the Felica protocol, a company standard from company Sony, with a data rate of e.g. 212 kbit/sec leading to an approximate frequency range of 848 kHz, centered at 13,56 MHz. The claimed HBC communication module adapts the FSK modulation of the HBC Information depending on the actual or planned NFC frequency range for the parallel HBC communication. This comprises the advantage, that the HBC frequency side bands are always outside or only slightly overlapping with the NFC frequency band to avoid an influence of the two parallel independent communication channels for NFC and HBC Information.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 shows part of a communication apparatus that enables a parallel and independent communication of NFC Information and HBC Information.
Figure 2 shows slightly overlapping frequency bands to communicate NFC Information and HBC Information.

### DETAILED DESCRIPTION OF EMBODIMENTS

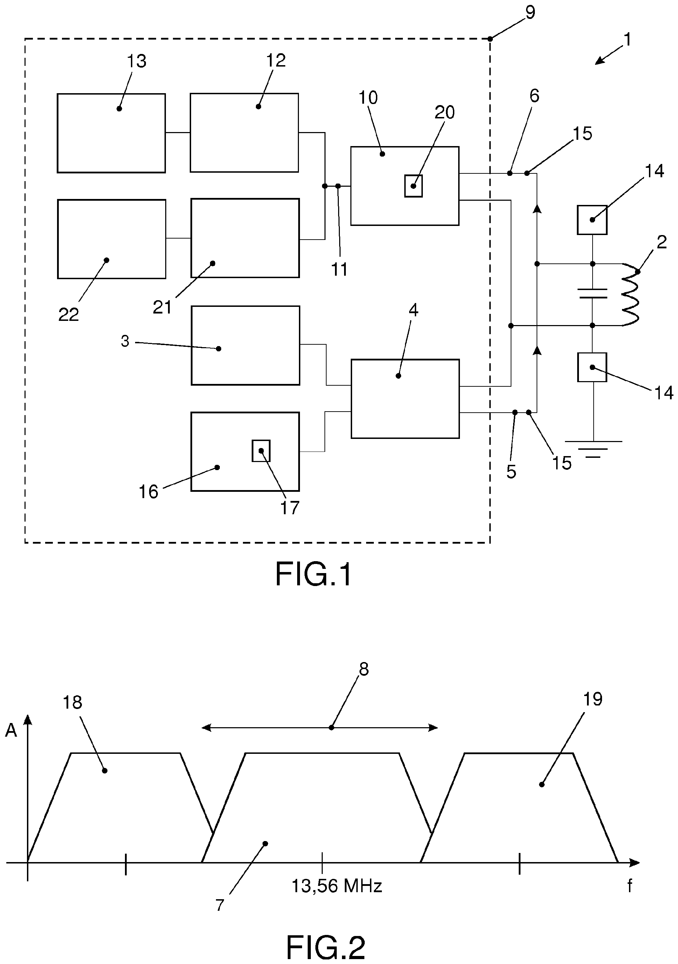

Figure 1 shows part of a mobile phone 1 with an antenna 2 that enables a parallel and independent communication of NFC Information and HBC Information. Mobile phone 1 according to this embodiment of the invention realizes an initiator that communicates with a target that could be realized as tag or smart card according to the ECMA-340 13,56 MHz Near Field Communication NFC standard, which NFC Standard in-cooperates communication based on ISO/IEC 14.443 Type A and B and Felica, a company standard from company Sony. Other initiators like a payment terminal a reader or consumer electronics device could be used as well. Mobile phone 1 furthermore comprises an NFC transmission module 3 with an oscillator and a transmission module 4 with a filter and an amplifier to generate a carrier frequency signal to emit a HF field with 13,56 MHz via antenna 2 and to transmit NFC Information 5 to one or more tags or smart cards. Such a tag is for instance disclosed in document US 7,890,080 B2.

When mobile phone 1 and a smart card are within close proximity of each other, mobile phone 1 generated HF field is induced into the antenna of the smart card and used to power the smart card. The smart card also has a transceiver to receive NFC Information 5 transmitted within the HF field from mobile phone 1 and to transmit a load modulated response as NFC Information 6 back to mobile phone 1. Load modulation is processed with one of the NFC modulation frequencies defined in the standard like 106, 212, 424 or 848kbps. Figure 2 shows the NFC frequency band 7 centered at the carrier frequency of 13,56 MHz with a frequency range 8 that depends on the modulation frequency used or planned to be used for the NFC communication.

Mobile phone 1 comprises an integrated circuit 9 with several pins to receive and provide NFC Information 5 and 6. Antenna 2 is directly connected to antenna input pins to receive an antenna signal from the antenna 2. Depending on the strengths of the carrier frequency signal and the objects close by antenna 2 and the noise received with antenna 2, the voltage of the antenna signal may vary from e.g. 100mV to 100 Volt. To avoid that integrated circuit 9 is damaged by a high voltage antenna signal, a special antenna signal processing circuit 10 is realized within integrated circuit 9 for each antenna input pin to process the antenna signal and to provide a processed antenna signal 11 to NFC filter module 12 and NFC demodulator module 13. Demodulator module 13 demodulates the processed antenna signal with the NFC modulation frequency to provide the NFC Information 6 received from the smart card or tag.

Mobile phone 1 furthermore enables a human body communication and comprises an HBC communication module with two pads 14 to transmit and receive HBC Information 15 via a human body that is in contact or nearly in contact with pads 14. HBC is known from prior art documents like US 7,664,476 B2 and for instance used to transmit audio data as HBC Information from an audio reproducing apparatus via the human body to wireless headphones. HBC communication module of mobile phone 1 comprises an HBC transmission module 16 with an oscillator of HBC modulation means 17 to modulate HBC Information 15 to be transmitted via transmission module 4 and pads 14 via the human body to an HBC communication partner. HBC Information 15 transmitted via the human body and received via pads 14 is processed by antenna signal processing circuit 10 and provided as processed antenna signal 11 to HBC filter module 21 and HBC demodulator module 22. HBC demodulator module 22 demodulates the processed antenna signal 11 with an HBC modulation frequency used by HBC modulation means 17 to provide the HBC Information 15 received from the HBC communication partner via the human body. HBC modulation means 17 use the NFC frequency of 13,56 MHz as center frequency and modulate HBC Information 15 into HBC frequency sidebands 18 and 19 shown in figure 2. HBC frequency sidebands 18 and 19 only slightly overlap NFC frequency band 7 to enable a parallel and independent communication of NFC Information 5 and HBC Information 15 with very limited or no crosstalk. This comprises the advantage that both communication channels for NFC Information 5 and HBC Information 15 may always be used to enable communication without delay.

HBC modulation means 17 use a Frequency Shift Keying FSK modulation to modulate the bits of the HBC Information 15 into at least one of the upper HBC frequency sideband 19 and the lower HBC frequency sideband 18. FSK modulation is in particular advantageous to communicate the HBC Information 15, because it is less susceptible to amplitude distortion caused by the human body being used as communication channel, which will severely degrade communication performance e.g. compared to ASK modulation as used in the NFC standard.

As frequency range 8 of the NFC frequency band 7 depends on the NFC protocol and/or NFC modulation frequency and/or data rate and HBC modulation means 17 are built to decide in which frequency ranges to locate the HBC frequency sidebands 18 and 19 to ensure that the HBC frequency sidebands 18 and 19 do not overlap or do only slightly overlap with the NFC frequency band 7. This ensures that even with changing NFC communication modes an independent and parallel NFC and HBC communication is possible.

Antenna signal processing circuit 10 realizes a receiver module and comprises a detuning circuit 20 to detune the resonance circuit of antenna 2 during times when no NFC communication is expected, to reduce attenuation of the HBC frequency sidebands 18 and 19. It is also possible that the detuning circuit is permanently activated when the signal strength of the antenna signal with NFC Information is sufficiently high for reliable communication. Detuning circuit 20 could be realized in transmission module 4 as well and helps to improve the signal quality for HBC communication to achieve high quality HBC Information 15.

One of the pads 14 of mobile phone 1 is connected to ground of the printed-circuitboard what enables a single ended communication. This comprises the advantage that as the ground plane is normally the biggest metal area available to the circuitry and by connecting to this ground the attenuation of the return path of the HBC is reduced and therefore the communication performance is improved.

In another embodiment of the invention, HBC Information 15 could be communicated only in the upper HBC frequency sideband 19 or only in the lower HBC frequency sideband 18 what advantageously reduces the overall frequency range used.

## Claims

1. Communication apparatus (1) that comprises a NFC communication module with an antenna (2) to transmit and receive NFC Information (5, 6) over the antenna (2) based on the NFC Standard and that comprises an HBC communication module with at least one pad (14) to transmit and receive HBC Information (15) over the at least one pad (14) via a human body **characterized in, that**
the HBC communication module comprises HBC modulation means (17) to transmit and receive HBC Information (15) modulated in HBC frequency sidebands (18, 19) outside or slightly overlapping the NFC frequency band (7) to enable a parallel and independent communication of NFC Information (5, 6) and HBC Information (15).

2. Apparatus (1) according to claim 1, wherein the HBC modulation means (17) use the NFC frequency of 13,56 MHz as carrier frequency to modulate HBC Information (15) into the HBC frequency sidebands (18, 19).

3. Apparatus (1) according to claim 1 or claim 2, wherein the HBC modulation means (17) use a Frequency Shift Keying modulation to modulate the bits of the HBC Information (15) into at least one of an upper HBC frequency sideband (19) and a lower HBC frequency sideband (18).

4. Apparatus (1) according to any of the claims 1 to 3, wherein the HBC communication module decides based on the NFC protocol and/or data rate selected in which frequency ranges to locate the HBC frequency sidebands (18, 19).

5. Apparatus (1) according to any of the claims 1 to 4, that comprises a transmitter module (4) to transmit NFC Information (5, 6) and HBC Information (15) and a receiver module (10) to receive NFC Information (5, 6) and HBC Information (15) which transmitter module (4) and/or which receiver module (10) comprises a detuning circuit (20) to reduce attenuation of the HBC frequency sidebands (18, 19).

6. Method to transmit and receive NFC Information (5, 6) over an antenna (2) based on the NFC Standard and to transmit and receive HBC Information (15) over at least one pad (14) via a human body, which method comprises the following steps:
transmit and receive NFC Information (5, 6) within the NFC frequency band (7) and
modulate and/or demodulate HBC Information (15) in/from HBC frequency sidebands (18, 19) outside or slightly overlapping the NFC frequency band (7) to enable a parallel and independent communication of NFC Information (5, 6) and HBC Information (15).
